# FASCICULE DE BREVET EUROPEEN

(11) **EP 4 543 668 B1**
(45) Date de publication et mention de la délivrance du brevet: **09.12.2026**
(21) Numéro de dépôt: 23739317.8
(22) Date de dépôt: 16.06.2023
(51) Int. Cl.: B29C 70/44, B29B 11/16, B29C 70/22, B29C 70/24, B29C 70/48, B29C 70/86, B29D 99/00, B32B 5/26, B60G 7/00, B64C 25/02, B64C 25/10, D03D 15/37, D03D 15/275, D03D 25/00, F16C 7/02, F16C 11/04, B29K 105/08, B29L 31/30

(54) **RENFORT FIBREUX POUR LA FABRICATION D'UNE PIÈCE COMPOSITE DESTINÉE À ÊTRE ARTICULÉE AVEC D'AUTRES PIÈCES**
FASERVERSTÄRKUNG ZUR HERSTELLUNG EINES VERBUNDTEILS, DAS ZUR VERBINDUNG MIT ANDEREN TEILEN BESTIMMT IST
FIBROUS REINFORCEMENT FOR THE MANUFACTURE OF A COMPOSITE PART INTENDED TO BE ARTICULATED WITH OTHER PARTS

(30) Priorité: 22.06.2022 FR 2206162
(43) Date de publication de la demande: 30.04.2025
(73) Titulaire: Safran Landing Systems, 78140 Vélizy-Villacoublay (FR); SAFRAN, 75015 Paris (FR)
(72) Inventeur: LECLERCQ, Sylvain, Didier, 77550 Moissy-Cramayel (FR); ROIRAND, Quentin, 77550 Moissy-Cramayel (FR); COUPE, Dominique, Marie, Christian, 77550 Moissy-Cramayel (FR); TRAN, Nicolas, 77550 Moissy-Cramayel (FR); DEL SORBO, Pietro, 77550 Moissy-Cramayel (FR)
(74) Mandataire: Cabinet Beau de Loménie
(86) Numéro de dépôt international: PCT/FR2023/050878
(87) Numéro de publication internationale: WO 2023/247868

(56) Documents cités:
- EP-A1- 1 736 674
- EP-A2- 0 402 099
- WO-A1-2022/112683
- US-A1- 2011 293 828
- US-A1- 2017 130 764

## Description

### Domaine Technique

L'invention a pour objet une préforme fibreuse destinée à former une partie d'un renfort fibreux d'une pièce en matériau composite laquelle pièce est destinée à être articulée avec d'autres pièces à ses extrémités, et un procédé de fabrication associé.

### Technique antérieure

L'emploi de matériaux composites en remplacement de matériaux métalliques peut être proposé dans une optique d'allègement, ce qui est une préoccupation constante dans le cas particulier de pièces d'aéronef. Dans cette vue, le document US 7 704 429 a proposé la fabrication de contrefiches de train d'atterrissage en matériau composite qui comprennent des régions, dites chapes, qui sont destinées à l'articulation et aux introductions d'effort avec d'autres pièces et sont formées par une structure stratifiée avec intercalation de plis entre des plis primaires prolongeant le corps du renfort. Cette solution peut néanmoins présenter des inconvénients. En effet, les chapes qui ont une configuration laminée peuvent conduire à une augmentation de la taille des zones d'introduction d'effort par rapport aux pièces métalliques afin d'éviter le risque de délamination. Le gain de masse du système global devient alors moins intéressant et l'intégration de la pièce plus contraignante du fait d'un encombrement accru. Un autre problème est que la technique de fabrication proposée met en œuvre une intervention manuelle significative qui peut aboutir à des non-conformités et à une augmentation du coût. Enfin les performances mécaniques du matériau composite proposé dans ce document peuvent être améliorées, notamment en termes de tenue à la compression sur une zone médiane de la longueur de la pièce dite zone courante. Une option pour répondre à cela est d'ajouter de la matière en zone courante ce qui pénalise alors la masse et n'apporte donc pas complètement satisfaction. WO2022112683A1 décrit une préforme fibreuse d'une partie d'âme d'un renfort fibreux et un procédé de fabrication d'un renfort fibreux utilisant une préforme fibreuse.

L'invention propose de répondre à tout ou partie des inconvénients précités.

### Exposé de l'invention

La présente invention concerne une préforme fibreuse selon la revendication 1.

Le rapport volumique de premiers fils relativement aux deuxièmes fils correspond au rapport [volume occupé par les premiers fils] / [volume occupé par les deuxièmes fils]. Pour des raisons de concision, ce rapport pourra être désigné dans la suite par le terme « rapport F1/F2 ». Dans le cas particulier où les premiers fils correspondent aux fils de chaîne, ce rapport correspond au rapport chaine/trame. Les premiers fils peuvent selon une variante correspondre aux fils de trame et les deuxièmes fils aux fils de chaîne.

L'invention propose une conception optimisée d'une préforme d'âme d'un renfort fibreux de type assemblage âme-ceinture qui est basée sur la technique de tissage tridimensionnel et sur des zones d'articulation en surépaisseur par rapport à la zone médiane, ou zone courante, afin d'obtenir une tenue améliorée aux efforts. En outre, il est proposé de rééquilibrer le rapport F1/F2 dans ces zones d'articulation de sorte à maîtriser le taux de fibres tout en autorisant une conception avec un nombre de couches de premiers fils constant ou sensiblement constant sur toute la longueur de la préforme. La fabrication présente ainsi un caractère répétable en s'affranchissant au maximum des étapes manuelles, et permet l'obtention d'un renfort de qualité améliorée en évitant, ou en limitant fortement, l'ajout local de premiers fils aux extrémités en surépaisseur et leur coupe subséquente laquelle peut résulter en des non-conformités en production du fait de légères sur-longueurs résiduelles.

Dans un exemple de réalisation, chaque extrémité longitudinale a un espacement entre colonnes consécutives de deuxièmes fils qui est inférieur à un espacement entre colonnes consécutives de deuxièmes fils dans la zone médiane.

Une telle caractéristique constitue un premier levier permettant de modifier le rapport F1/F2 de sorte à le rééquilibrer aux extrémités longitudinales.

En variante ou en combinaison, chaque extrémité longitudinale a un titre des deuxièmes fils supérieur à un titre des deuxièmes fils dans la zone médiane.

Une telle caractéristique constitue un deuxième levier permettant de modifier le rapport F1/F2 de sorte à le rééquilibrer aux extrémités longitudinales.

Bien entendu, on peut modifier le rapport F1/F2 en modifiant à la fois l'espacement inter-colonnes et le titre des deuxièmes fils.

Selon l'invention, la préforme définit, sur des côtés supérieur et inférieur, des bords de positionnement présentant une dimension transversale, mesurée transversalement à la direction longitudinale, évolutive et passant par un maximum dans la zone médiane.

Cette dimension transversale augmentée permet d'augmenter l'inertie de la pièce ce qui est bénéfique pour la tenue au flambage, flexion et certains modes vibratoires. En outre, la tenue de l'interface augmente avec la surface qui augmente.

Dans un exemple de réalisation, la préforme est en fils de carbone.

L'invention vise également un procédé de fabrication d'un renfort fibreux d'une pièce en matériau composite, comprenant :
- le positionnement d'une texture fibreuse tissée de ceinture sur une préforme d'une partie d'âme telle que décrite plus haut, la texture de ceinture définissant une boucle autour de la préforme de la partie d'âme de sorte à définir, aux extrémités longitudinales, des espaces libres destinés à une articulation avec d'autres pièces. Dans un exemple de réalisation, la texture de ceinture est en fils de carbone. L'invention concerne également un procédé de fabrication d'une pièce composite destinée à être articulée avec d'autres pièces, comprenant :
- la formation d'un renfort fibreux tel que décrit plus haut, et
- la formation d'une matrice dans une porosité du renfort fibreux ainsi obtenu.

Dans un exemple de réalisation, la matrice est une matrice organique.

Dans un exemple de réalisation, la pièce est une contre-fiche de train d'atterrissage, une partie d'une contre-fiche de train d'atterrissage ou une barre de frein.

### Brève description des dessins

[Fig. 1] La figure 1 représente un exemple de préforme fibreuse d'âme selon l'invention.
[Fig. 2A] La figure 2A représente la section transversale de la préforme de la figure 1 sur une première zone de sa longueur.
[Fig. 2B] La figure 2B représente la section transversale de la préforme de la figure 1 sur une deuxième zone de sa longueur.
[Fig. 2C] La figure 2C représente la section transversale de la préforme de la figure 1 sur une troisième zone de sa longueur.
[Fig. 3] La figure 3 représente un détail d'un exemple d'extrémité longitudinale d'une préforme d'âme selon l'invention.
[Fig. 4] La figure 4 représente un détail d'un exemple d'extrémité longitudinale d'une préforme d'âme selon l'invention.
[Fig. 5] La figure 5 représente un renfort fibreux de pièce en matériau composite obtenu après positionnement de la texture de ceinture sur la préforme de la figure 1.

### Description des modes de réalisation

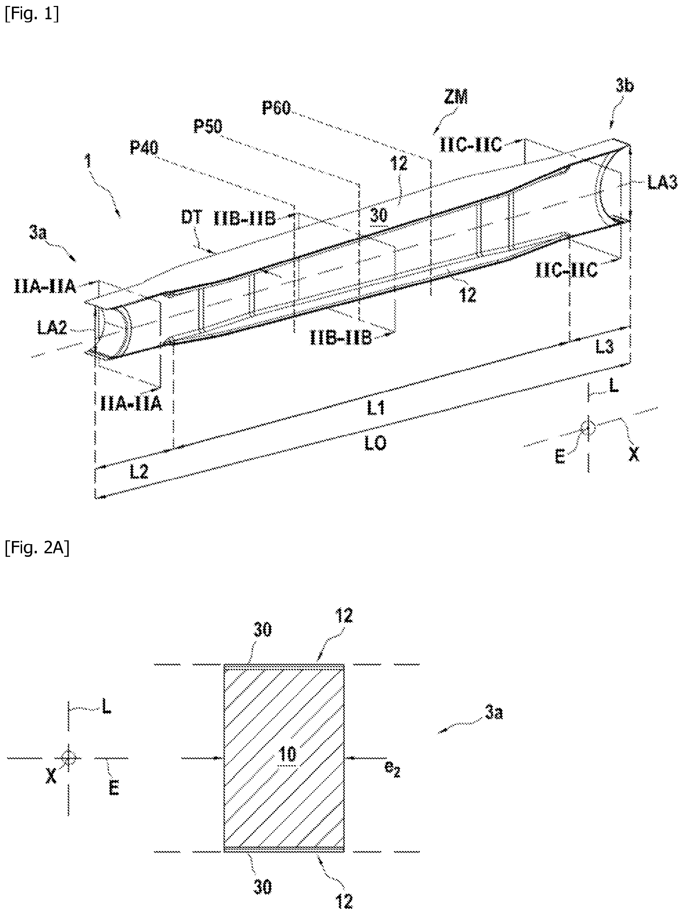

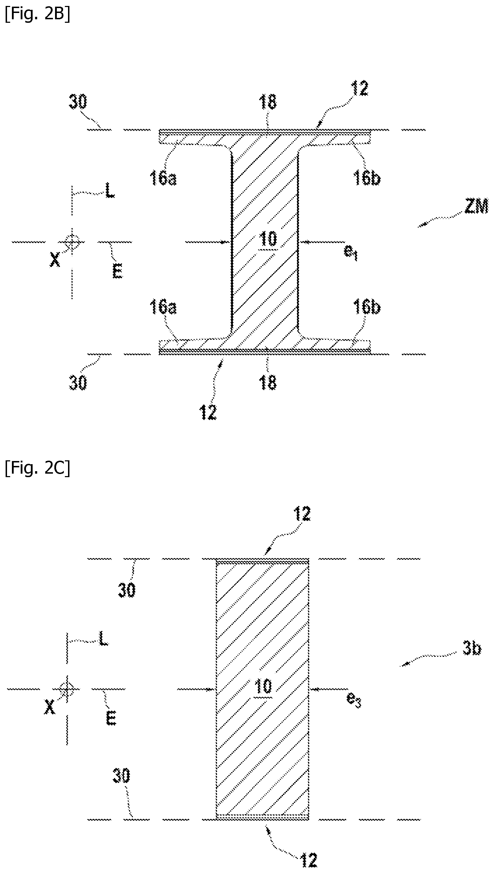

On a représenté à la figure 1 une préforme fibreuse 1 d'une âme d'un renfort fibreux pour pièce en matériau composite. La préforme 1 a une forme élancée en s'étendant le long d'une direction longitudinale X. Elle peut être obtenue par tissage tridimensionnel en une seule pièce en utilisant par exemple une armure de tissage « interlock ». Par « tissage tridimensionnel » ou « tissage 3D », on entend un mode de tissage par lequel certains au moins des premiers fils dirigés selon la direction X lient des deuxièmes fils transverses aux premiers fils sur plusieurs couches de deuxièmes fils. Un tel tissage peut être réalisé dans un métier à tisser de type Jacquard, de façon connue en soi. La préforme 1 comprend successivement le long de la direction X une première extrémité longitudinale 3a, une zone médiane ZM et une deuxième extrémité longitudinale 3b. Chacune de la première extrémité 3a, de la zone médiane ZM et de la deuxième extrémité 3b peuvent être obtenues par tissage tridimensionnel et être situées dans le prolongement textile les unes des autres. La zone médiane ZM peut être destinée à subir des efforts de traction et de compression. Les extrémités longitudinales 3a, 3b ont une forme incurvée, par exemple sensiblement circulaire, et sont destinées à définir, dans la pièce à obtenir, des espaces libres dédiés à l'articulation avec d'autres pièces. Selon un exemple, la zone médiane ZM peut avoir une longueur L1 comprise entre 50% et 98% de la longueur LO de la préforme 1 et chaque extrémité 3a, 3b peut avoir une longueur L2, L3 comprise entre 1% et 25% de la longueur LO. Les longueurs sont mesurées le long de la direction X. La zone médiane ZM peut être centrée par rapport à un plan P50 situé à mi-longueur de la préforme 1 et perpendiculaire à la direction X. Les extrémités longitudinales 3a, 3b ont ici des dimensions différentes et notamment des largeurs LA2, LA3 différentes lesquelles sont mesurées le long de la direction L de largeur. La préforme 1 définit sur ses côtés supérieur et inférieur des bords 12 de positionnement s'étendant le long de la direction longitudinale X et définissant une surface 30 de positionnement de la texture de ceinture. La dimension transversale DT des bords 12 de positionnement dans la zone médiane ZM est supérieure à celle dans les extrémités 3a, 3b. Cette dimension DT peut, comme illustré, être croissante sur la zone médiane ZM lorsque l'on se déplace depuis la première extrémité 3a, être maximale au voisinage du plan P50 de mi-longueur de la préforme 1 par exemple au moins sur le tronçon situé entre les plans P40 et P60 situés à 40% et à 60% de la longueur LO et perpendiculaires à la direction X, puis décroître sur la zone médiane ZM en direction de la deuxième extrémité 3b. En section transversale, la préforme 1 comprend une portion centrale 10 qui présente sur ses côtés supérieur et inférieur les deux bords 12 de positionnement. Dans l'exemple illustré, les bords 12 ainsi que la portion centrale 10 sont décalés le long de la largeur (direction L). La préforme 1 peut être obtenue par tissage tridimensionnel d'une bande fibreuse en une seule pièce en ménageant des déliaisons de sorte à former après rabattement des portions déliées 16a, 16b les bords de positionnement 12. Une portion intercalaire 18 permettant d'obtenir une surface de positionnement 30 de forme généralement plane peut être présente entre les portions 16a, 16b et être obtenue par découpe d'une texture intercalaire déliée des portions 16a et 16b. Dans l'exemple illustré et comme illustré aux figures 2A à 2C, l'épaisseur e2 de la première extrémité 3a est supérieure à l'épaisseur e1 de la zone médiane ZM. L'épaisseur e3 de la deuxième extrémité 3b est inférieure à l'épaisseur e2 mais supérieure à l'épaisseur e1. Les épaisseurs sont mesurées le long de la direction d'épaisseur (direction E) et correspondent à la plus petite dimension. Selon un exemple, le rapport e2 / e1 peut être supérieur à 1 et inférieur ou égal à 4, par exemple compris entre 1,5 et 2,5, et le rapport e3 / e1 peut être supérieur à 1 et inférieur ou égal à 4, par exemple compris entre 1,5 et 2,5. La préforme 1 peut comme illustré avoir une forme en I (dite forme en double cornière) en section transversale par rapport à la direction longitudinale X. Dans l'exemple illustré, les bords 12 de positionnement forment chacun un angle sensiblement égal à 90° avec la direction L. Les bords 12 de positionnement forment des ailettes latérales pour le positionnement de la texture de ceinture. La préforme 1 définit, au niveau des bords 12 de positionnement, la surface 30 de positionnement sur laquelle la texture de ceinture est destinée à être déposée.

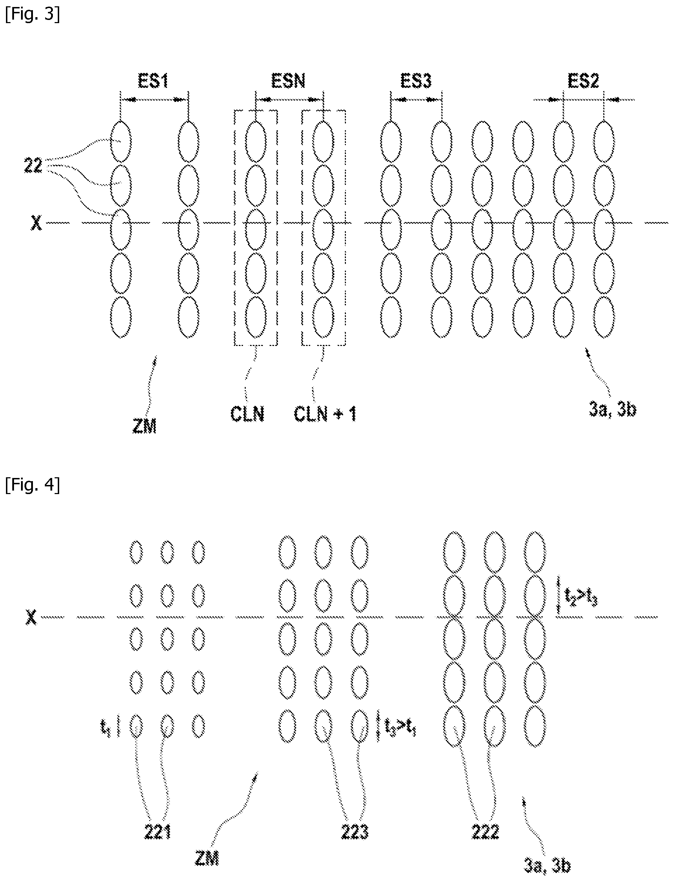

Comme indiqué plus haut, le rapport F1/F2 dans les extrémités 3a et 3b est inférieur au rapport F1/F2 dans la zone médiane ZM et plus proche de l'unité que ce dernier. Ainsi, la valeur absolue de la différence [(deuxième rapport volumique de premiers fils relativement aux deuxièmes fils) - 1] est inférieure à la différence [(premier rapport volumique de premiers fils relativement aux deuxièmes fils) - 1]. Selon un exemple, le rapport F1/F2 dans la zone médiane ZM peut être compris entre 1,2 et 9, et le rapport F1/F2 dans les extrémités 3a et 3b peut être compris entre 0,6 et 4. On notera que les extrémités 3a et 3b peuvent avoir un rapport F1/F2 identique ou différent. Les figures 3 et 4 représentent différentes manières de faire varier le rapport F1/F2. Dans l'exemple de la figure 3, l'espacement ESN entre colonnes consécutives CLN et CLN+1 de deuxièmes fils 22 est modifié de sorte à diminuer à une valeur ES2 dans une zone d'extrémité 3a, 3b inférieure à une valeur ES1 dans la zone médiane ZM. Comme illustré, cette évolution peut se faire de manière progressive en passant par une ou plusieurs valeurs intermédiaires ES3 inférieures à ES1 tout en étant supérieures à ES2. Selon un exemple, le rapport ES1/ES2 peut être compris entre 1 et 5. La figure 4 représente le cas où le titre des deuxièmes fils est augmenté dans la zone d'extrémité 3a, 3b par rapport à la zone médiane ZM entre un premier titre t1 et un deuxième titre t2 (fils 221 avec titre t1 et fils 222 avec titre t2). Cette évolution peut être progressive en passant par des deuxièmes fils 223 ayant un ou plusieurs titres intermédiaires t3 supérieurs à t1 tout en étant inférieurs à t2.

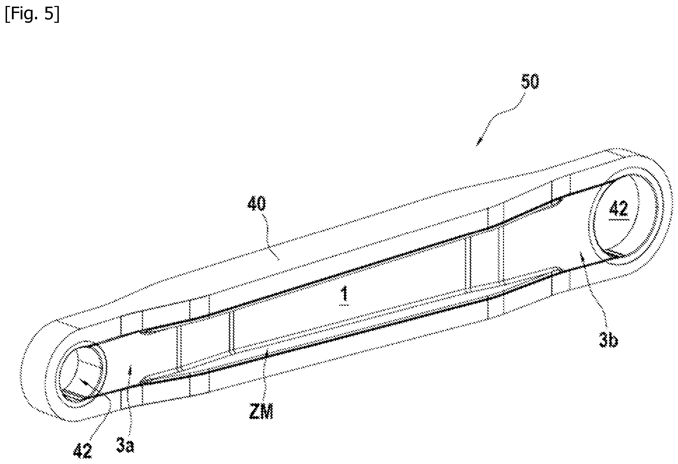

On vient de décrire un exemple de préforme 1 selon l'invention. Cette préforme 1 n'est destinée qu'à former une partie seulement du renfort fibreux 50 de la pièce en matériau composite à obtenir. La suite s'attache à décrire la suite de la fabrication de la pièce laquelle comprend le positionnement autour de la préforme 1 d'une texture 40 tissée de ceinture, comme cela est illustré à la figure 5. La texture 40 peut avoir une forme de bande qui est enroulée autour de la préforme 1. Lors de son positionnement, la texture 40 vient en appui sur la surface 30 de positionnement. La texture 40 peut se présenter sous la forme d'une même bande de tissu mais on ne sort pas du cadre de l'invention si elle est sous la forme de plusieurs bandes mises bout à bout ou côte à côte. La texture 40 peut également être obtenue par tissage tridimensionnel, par exemple avec une armure « interlock ». La texture 40 définit une boucle fermée autour de la préforme 1 et définit des espaces libres 42 destinés à l'articulation avec les autres pièces. La texture 40 peut suivre la forme des bords de positionnement 12 de sorte à les recouvrir entièrement. On peut provisoirement utiliser des inserts (non représentés) au niveau des extrémités longitudinales 3 et enrouler la deuxième texture 40 autour de ces derniers de sorte à garantir la forme souhaitée pour les régions d'extrémité. On réalise alors une densification de l'ensemble de la préforme 1 et de la texture 40, par exemple par introduction d'une résine, comme une résine époxy, suivie d'une réticulation de celle-ci s'il s'agit d'une résine thermodurcissable ou d'un refroidissement s'il s'agit d'une résine thermoplastique. La formation de la matrice peut être réalisée par technique de moulage par transfert de résine (« Resin Transfer Molding ») qui correspond à une technique connue en soi. On obtient ainsi une pièce en matériau composite destiné à être articulée avec d'autres pièces à ses extrémités longitudinales. Le renfort fibreux 50 de la pièce peut être formé de fils de carbone et la pièce peut présenter une matrice organique comme il vient d'être décrit. La pièce peut ou non être destinée à une application aéronautique. La pièce peut par exemple être une bielle, une contre-fiche de train d'atterrissage ou un élément constitutif de celle-ci, ou encore une barre de frein. La pièce obtenue peut être montée à d'autres pièces en positionnant au travers des espaces libres 42 un axe d'articulation pour la liaison à d'autres pièces ainsi qu'un insert de contact avec cet axe.

## Revendications

1. Préforme fibreuse (1) d'une partie d'âme d'un renfort fibreux (50) pour une pièce en matériau composite, la préforme ayant une forme élancée le long d'une direction longitudinale (X) et étant formée par tissage tridimensionnel de premiers fils s'étendant le long de la direction longitudinale avec des deuxièmes fils transverses aux premiers fils,
la préforme comprenant deux extrémités longitudinales (3a ; 3b) destinées à une articulation avec d'autres pièces et une zone médiane (ZM) située entre les extrémités longitudinales, chaque extrémité longitudinale ayant une épaisseur (e2 ; e3) supérieure à une épaisseur (e1) de la zone médiane, la zone médiane ayant un premier rapport volumique de premiers fils relativement aux deuxièmes fils qui est supérieur à l'unité, et chaque extrémité longitudinale ayant un deuxième rapport volumique de premiers fils relativement aux deuxièmes fils qui est inférieur au premier rapport et plus proche de l'unité que ce premier rapport, **caractérisé en ce que** la préforme définit, sur des côtés supérieur et inférieur, des bords (12) de positionnement présentant une dimension transversale (DT), mesurée transversalement à la direction longitudinale, évolutive et passant par un maximum dans la zone médiane (ZM).

2. Préforme fibreuse (1) selon la revendication 1, dans laquelle chaque extrémité longitudinale (3a ; 3b) a un espacement (ES2) entre colonnes consécutives de deuxièmes fils qui est inférieur à un espacement (ES1) entre colonnes consécutives de deuxièmes fils dans la zone médiane (ZM).

3. Préforme fibreuse (1) selon la revendication 1 ou 2, dans laquelle chaque extrémité longitudinale (3a ; 3b) a un titre (t2 ; t3) des deuxièmes fils supérieur à un titre (t1) des deuxièmes fils dans la zone médiane (ZM).

4. Préforme fibreuse (1) selon l'une quelconque des revendications 1 à 3, dans laquelle la préforme est en fils de carbone.

5. Procédé de fabrication d'un renfort fibreux (50) d'une pièce en matériau composite, comprenant :
- le positionnement d'une texture fibreuse (40) tissée de ceinture sur une préforme (1) d'une partie d'âme selon l'une quelconque des revendications 1 à 4, la texture de ceinture définissant une boucle autour de la préforme de la partie d'âme de sorte à définir, aux extrémités longitudinales (3a ; 3b), des espaces libres (42) destinés à une articulation avec d'autres pièces.

6. Procédé selon la revendication 5, dans lequel la texture de ceinture (40) est en fils de carbone.

7. Procédé de fabrication d'une pièce composite destinée à être articulée avec d'autres pièces, comprenant :
- la formation d'un renfort fibreux (50) selon la revendication 5 ou 6, et
- la formation d'une matrice dans une porosité du renfort fibreux ainsi obtenu.

8. Procédé selon la revendication 7, dans lequel la matrice est une matrice organique.

9. Procédé selon la revendication 7 ou 8 dans lequel la pièce est une contre-fiche de train d'atterrissage, une partie d'une contre-fiche de train d'atterrissage ou une barre de frein.

## Patentansprüche

1. Faservorformling (1) eines Kernabschnitts einer Faserverstärkung (50) für ein Teil aus Verbundwerkstoff, wobei der Vorformling gemäß einer Längsrichtung (X) eine längliche Form aufweist und durch dreidimensionales Weben erster Fäden, die sich gemäß der Längsrichtung erstrecken, mit zweiten Fäden, die quer zu den ersten Fäden verlaufen, gebildet ist,
wobei der Vorformling zwei Längsenden (3a; 3b), die zu einer gelenkigen Verbindung mit anderen Teilen bestimmt sind, und einen zwischen den Längsenden gelegenen mittleren Bereich (ZM) umfasst, wobei jedes Längsende eine Dicke (e2; e3) aufweist, die größer als eine Dicke (e1) des mittleren Bereichs ist, wobei der mittlere Bereich ein erstes Volumenverhältnis erster Fäden zu den zweiten Fäden aufweist, das größer als eins ist, und jedes Längsende ein zweites Volumenverhältnis erster Fäden zu den zweiten Fäden aufweist, das kleiner als das erste Verhältnis und näher an eins als das erste Verhältnis ist, **dadurch gekennzeichnet, dass** der Vorformling an der Oberseite und Unterseite Positionierungsränder (12) definiert, die eine quer zu der Längsrichtung gemessene Querabmessung (DT) aufweisen, die veränderlich ist und im mittleren Bereich (ZM) ein Maximum erreicht.

2. Faservorformling (1) nach Anspruch 1, wobei jedes Längsende (3a; 3b) einen Abstand (ES2) zwischen aufeinanderfolgenden Spalten zweiter Fäden aufweist, der kleiner als ein Abstand (ES1) zwischen aufeinanderfolgenden Spalten zweiter Fäden in dem mittleren Bereich (ZM) ist.

3. Faservorformling (1) nach Anspruch 1 oder 2, wobei jedes Längsende (3a; 3b) einen Titer (t2; t3) der zweiten Fäden aufweist, der größer als ein Titer (t1) der zweiten Fäden in dem mittleren Bereich (ZM) ist.

4. Faservorformling (1) nach einem der Ansprüche 1 bis 3, wobei der Vorformling aus Kohlenstofffäden ist.

5. Verfahren zur Herstellung einer Faserverstärkung (50) eines Teils aus Verbundwerkstoff, umfassend:
- Positionieren einer gewebten Gurtfaserstruktur (40) auf einem Vorformling (1) eines Kernabschnitts nach einem der Ansprüche 1 bis 4, wobei die Gurtfaserstruktur eine Schlaufe um den Vorformling des Kernabschnitts bildet, so dass an den Längsenden (3a; 3b) freie Räume (42) definiert werden, die zu einer gelenkigen Verbindung mit anderen Teilen bestimmt sind.

6. Verfahren nach Anspruch 5, wobei die Gurtfaserstruktur (40) aus Kohlenstofffäden ist.

7. Verfahren zur Herstellung eines Verbundteils, das zur gelenkigen Verbindung mit anderen Teilen bestimmt ist, umfassend:
- Herstellen einer Faserverstärkung (50) nach Anspruch 5 oder 6, und
- Bilden einer Matrix in einer Porosität der so erhaltenen Faserverstärkung.

8. Verfahren nach Anspruch 7, wobei die Matrix eine organische Matrix ist.

9. Verfahren nach Anspruch 7 oder 8, wobei das Teil eine Fahrwerkstrebe, ein Teil einer Fahrwerkstrebe oder eine Bremsstange ist.

## Claims

1. A fibrous preform (1) of a core portion of a fibrous reinforcement (50) for a part of composite material, the preform having an elongate shape along a longitudinal direction (X) and being formed by three-dimensional weaving of first yarns extending along the longitudinal direction with second yarns transverse to the first yarns;
the preform comprising two longitudinal ends (3a; 3b) intended for articulation with other parts and a median area (ZM) located between the longitudinal ends, each longitudinal end having a thickness (e2; e3) greater than a thickness (e1) of the median area, the median area having a first volume ratio of first yarns to second yarns which is greater than one, and each longitudinal end having a second volume ratio of first yarns to second yarns which is less than the first ratio and closer to one than this first ratio, **characterized in that** the preform defines, on upper and lower sides, positioning edges (12) having a transverse dimension (DT), measured transversely to the longitudinal direction (X), that evolves and passes through a maximum in the median area (ZM).

2. The fibrous preform (1) according to claim 1, wherein each longitudinal end (3a; 3b) has a spacing (ES2) between consecutive columns of second yarns that is less than a spacing (ES1) between consecutive columns of second yarns in the median area (ZM).

3. The fibrous preform (1) according to claim 1 or 2, wherein each longitudinal end (3a; 3b) has a weight (t2; t3) of the second yarns greater than a weight (t1) of the second yarns in the median area (ZM).

4. The fibrous preform (1) according to any one of claims 1 to 3, wherein the preform is made of carbon yarns.

5. A method for manufacturing a fibrous reinforcement (50) of a composite material part, comprising:
- positioning a woven fibrous belt texture (40) on a preform (1) of a core portion according to any of claims 1 to 5, the belt texture defining a loop around the preform of the core portion so as to define, at the longitudinal ends (3a; 3b), free spaces (42) intended for articulation with other parts.

6. The method according to claim 6, wherein the belt texture (40) is made of carbon yarns.

7. A method of manufacturing a composite part intended to be articulated with other parts, comprising:
- forming a fibrous reinforcement (50) according to claim 6 or 7, and
- forming a matrix in a porosity of the fibrous reinforcement thus obtained.

8. The method according to claim 8, wherein the matrix is an organic matrix.

9. The method according to claim 8 or 9 wherein the component is a landing gear strut, a portion of a landing gear strut or a brake bar.
